# EUROPÄISCHE PATENTSCHRIFT

(11) **EP 3 048 614 B1**
(45) Veröffentlichungstag und Bekanntmachung des Hinweises auf die Patenterteilung: **17.01.2018**
(21) Anmeldenummer: 16155068.6
(22) Anmeldetag: 28.02.2013
(51) Int. Cl.: G21C 19/26, G21F 5/008, G21F 5/12, F26B 21/00, G21C 19/32, F26B 21/04, F26B 25/22, F26B 5/12, F26B 3/04, F26B 25/06

(54) **VERFAHREN UND VORRICHTUNG ZUR KAPSELUNG EINES BRENNSTABES ODER EINES BRENNSTABABSCHNITTES FÜR EINE ZWISCHENLAGERUNG**
METHOD AND DEVICE FOR ENCAPSULATING A FUEL ROD OR A FUEL ROD SECTION FOR INTERMEDIATE STORAGE
PROCEDE ET DISPOSITIF D'ENCAPSULAGE D'UNE BARRE DE COMBUSTIBLE OU D'UNE SECTION DE BARRE DE COMBUSTIBLE POUR UN STOCKAGE TEMPORAIRE

(30) Priorität: 02.03.2012 DE 102012203347; 20.06.2012 DE 102012210409; 10.07.2012 DE 102012212006
(43) Veröffentlichungstag der Anmeldung: 27.07.2016
(62) Teilanmeldung aus: 13710803.1
(73) Patentinhaber: AREVA GmbH, 91052 Erlangen (DE)
(72) Erfinder: Hummel, Wolfgang, 92318 Neumarkt (DE); Neubauer, Egon, 91301 Forchheim (DE); Kurzer, Klaus, 91338 Igensdorf-Etlaswind (DE); Höfers, Werner, 91056 Erlangen (DE)
(74) Vertreter: Schlögl, Markus

(56) Entgegenhaltungen:
- DE-A1- 3 028 884
- DE-B3-102010 036 373
- US-A1- 2009 158 614

## Beschreibung

Verfahren und Vorrichtung zur Kapselung eines Brennstabes oder eines Brennstababschnittes für eine Zwischenlagerung

Die Erfindung bezieht sich auf ein Verfahren und eine Vorrichtung zur Kapselung eines Brennstabes oder eines Brennstababschnittes für eine Zwischenlagerung.

Zu Transport- und/oder Lagerzwecken werden defekte Brennstäbe oder Brennstababschnitte vakuum- und fluiddicht in Behälter oder Kapseln eingebracht, wie sie beispielsweise aus der DE 196 40 393 B4, der EP 1 248 270 A1, der EP 1 600 982 B1 und der WO 2010/084122 A1 bekannt sind. Da die Kapselung eines Brennstabes oder eines Brennstababschnittes möglichst nahe am Ort der ursprünglichen Lagerung, d.h. innerhalb des Brennelementlagerbeckens unter Wasser erfolgt, ist es unvermeidlich, dass beim Einbringen des Brennstabes oder Brennstababschnittes in den geöffneten Behälter Wasser in diesen eindringt. Dieses Wasser muss jedoch aus dem Brennstabbehälter entfernt werden, da es aufgrund der Nachzerfallswärme verdampfen und zu einem unzulässig hohen Innendruck führen würde. Aus diesem Grund weisen die für die aus der DE 196 40 393 B4, der EP 1 248 270 A1, der EP 1 600 982 B1 bekannten Behälter verwendeten Verschlusselemente einen Kanal auf, über den Gas eingeblasen werden kann, so dass das im Behälter befindliche Wasser ausgetrieben wird. Bei den aus der DE 196 40 393 B4 und der EP 1 248 270 A1 jeweils bekannten Verschlussstopfen ist in jedem Verschlussstopfen ein koaxialer Kanal vorgesehen, in dem ein federbelastetes Ventil angeordnet ist, das mit einem Schließelement den Kanal fluiddicht verschließt. Zum Austreiben des Wassers werden diese Schließelemente mit Hilfe eines Stößels von ihrem Ventilsitz abgehoben und es wird über einen dann offenen Kanal ein Gas eingeblasen und das Wasser über den ebenfalls offenen Kanal des gegenüber liegenden Verschlusselementes ausgetrieben. Bei beiden bekannten Behältern erfolgt dieses Austreiben des Wassers, wenn sich die Verschlusselemente durch Verschrauben, Verschweißen oder Verformen in ihrer Endmontageposition befinden, in der sie den Behälter fluiddicht verschließen.

Bei dem aus der EP 1 600 982 B1 bekannten Behälter ist ein auf ein Außengewinde des Behälters aufschraubbares Verschlusselement vorgesehen, in dem ein Dichtelement axial verschiebbar gelagert ist. In einer Zwischenposition des Verschlusselementes, in der dieses noch nicht festgezogen ist, liegt zwischen der Dichtfläche des Dichtelementes und der mit ihr als Dichtpaarung zusammenwirkenden Stirnfläche des hohlzylindrischen Behälterteils eine Trennfuge vor, die mit einer seitlichen Belüftungsöffnung im Verschlusselement kommuniziert und in dieser Zwischenposition den Außenraum mit dem Spülraum des hohlzylindrischen Behälterteils fluidisch verbindet.

Bei dem aus der WO 2010/084122 A1 bekannten Behälter ist als Verschlusselement eine Kappe vorgesehen, die auf ein hohlzylindrisches Behälterteil aufgeschoben und mit dessen Stirnfläche stoffschlüssig verbunden wird. Das Verschließen des Behälters erfolgt in einer fluiddichten Kammer. Vor dem Verschließen, d.h. bei nicht auf den hohlzylindrischen Behälterteil aufgesetzter Kappe wird die in der Kammer befindliche Flüssigkeit abgezogen und anschließend eine Vakuumtrocknung durchgeführt. Aufgrund der innerhalb des mit einem Brennstab bestückten Behälters zwischen Brennstab und Innenwand des Behälters vorliegenden engen Spalte, kann unter Umständen Restwasser im Behälter verbleiben.

Weiterhin ist aus der DE 10 2010 036 373 B3 ein Verfahren und eine Anordnung zum gasdichten Umschließen eines sich in einer Flüssigkeit befindlichen Brennstabs bekannt. Bei der Kapselung von Brennstäben oder Brennstababschnitten für eine längerfristige Zwischenlagerung stellt der Verbleib an Restwasser im Behälter ein erhebliches Problem dar. Dieses darf eine vorgegebene Menge, in der Regel 1g, nicht überschreiten. Mit den bekannten Verfahren ist es aber nicht möglich, eine quantitative Aussage über den in der Brennstabkapsel auch nach Vakuumtrocknung insgesamt verbleibenden Gehalt an Restwasser zu treffen.

Der Erfindung liegt daher die Aufgabe zugrunde, ein Verfahren zur Kapselung eines Brennstabes oder eines Brennstababschnittes anzugeben, bei dem dieser gasdicht und in einem Behälter eingeschlossen wird, und mit dem es möglich ist, eine quantitative Aussage über den Gehalt an Restwasser im Behälter zu treffen. Der Erfindung liegt außerdem die Aufgabe zu Grunde, eine Vorrichtung anzugeben, mit der ein einen Brennstab oder Brennstababschnitt enthaltender Behälter mit bekanntem Gehalt an Restwasser verschlossen werden kann.

Die genannten Aufgaben werden jeweils gelöst mit den Merkmalen der nebengeordneten Patentansprüche 1 und 5. Vorteilhafte Ausgestaltungen sind in den diesen nebengeordneten Patentansprüchen jeweils nachgeordneten Unteransprüchen angegeben.

Gemäß Patentanspruch 1 umfasst eine erfindungsgemäße Vorrichtung zur Kapselung eines in einem Behälter eingebrachten Brennstabes oder Brennstababschnittes in dem Behälter folgende Merkmale:
a) die Vorrichtung weist eine erste und eine zweite Kammer auf,
b) erste und eine zweite Kammer sind voneinander beabstandet und auf einer gemeinsamen Systemachse angeordnet,
c) erste und zweite Kammer sind mit einer ersten bzw. zweiten Öffnung zum Aufnehmen eines in die Kammer mündenden Freiendes des Behälters derart versehen, dass erste und zweite Kammer bei zwischen diesen angeordnetem Behälter ausschließlich über diesen selbst fluidisch miteinander verbunden werden können,
d) die erste Kammer ist an eine Einlassleitung und die zweite Kammer an eine Auslassleitung für ein Spülgas angeschlossen,
e) Einlassleitung und Auslassleitung sind über eine außerhalb der Kammern verlaufende Bypassleitung derart miteinander verbindbar, dass ein für Wasserdampf geschlossener Gaskreislauf entsteht, wobei im Gaskreislauf eine Pumpe und eine Heizeinrichtung zum Umwälzen bzw. Heizen eines im Gaskreislauf befindlichen Heizgases angeordnet sind,
f) im Gaskreislauf sind Messeinrichtungen zum Erfassen des absoluten Feuchtegehaltes des aus der zweiten Kammer in die Bypassleitung strömenden Heizgases angeordnet,
g) jede Kammer weist Mittel zum Verschließen des Behälters auf.

In einer vorteilhaften Ausführungsform sind erste und zweite Kammer entlang der Systemachse miteinander starr über ein Verbindungsrohr verbunden, in das der Behälter derart einführbar ist, dass er mit seinen Freienden über das Verbindungsrohr hinausragt.

Insbesondere ist zwischen Behälter und Verbindungsrohr zumindest ein Dichtelement angeordnet, das derart einstellbar ist, dass die Kammern ausschließlich über den Behälter fluidisch miteinander verbunden sind.

Wenn an beiden Enden des Verbindungsrohres ein einstellbares Dichtelement angeordnet ist, wird zwischen Behälter und Verbindungsrohr ein zylindrischer Spaltraum gebildet, der gegenüber den Kammern fluiddicht abgeschlossen ist.

Das erfindungsgemäße Verfahren zur Kapselung eines Brennstabes oder Brennstababschnittes in einem Behälter gemäß Patentanspruch 5 umfasst folgende Verfahrensschritte:
a) Einbringen des Brennstabes oder Brennstababschnittes in den Behälter,
b) Anschließen eines der Enden des Behälters an eine Spülgasleitung,
c) Entwässern und Spülen des Behälters mit Spülgas,
d) Anschließen der Enden des Behälters an eine Bypassleitung derart, dass ein für Wasserdampf geschlossener Gaskreislauf entsteht und Zirkulieren eines Heizgases in diesem Gaskreislauf bis der absolute Feuchtegehalt einen Endwert erreicht, bei dem er nicht mehr ansteigt,
e) Trennen des Behälters vom Gaskreislauf,
f) anschließendes fluiddichtes Verschließen des Behälters an beiden Enden.

Vorzugsweise wird der Behälter vor dem Verschließen erneut mit Spülgas gespült.

Wenn außerdem die Verfahrensschritte c) und d) nacheinander mehrfach zyklisch durchgeführt werden, wobei bei jedem Zyklus der Verfahrensschritt c) und anschließend der Verfahrensschritt d) durchgeführt werden, können besonders niedrige Grenzwerte für den Feuchtegehalt sicher erreicht werden.

Die Lagerung von Behältern in denen jeweils ein Brennstab oder Brennstababschnitt gekapselt ist, werden in einem möglichen, nicht erfindungsgemäßen Verfahren folgende Verfahrensschritte durchgeführt
a) Einbringen der Behälter in einen eine Mehrzahl von gitterförmigen Abstandhaltern aufweisenden, an einer Oberseite offenen Kapselköcher,
b) fluiddichtes Verschließen des Kapselköchers mit einer Haube,
c) Aufsetzen eines mit einer in das Innere des Kapselköchers regenden und mit einer durch die Haube geführte Absaugleitung fluidisch verbundenen Sauglanze versehenen Deckels auf den Kapselköcher
d) Absaugen des im Kapselköcher befindlichen Wassers mit der Sauglanze,
e) Spülen des Kapselköchers mit Spülgas,
f) Spülen des Kapselköchers mit einem Heizgas bis der absolute Feuchtegehalt einen vorgegebenen Grenzwert erreicht,
g) Verschweißen des Deckels mit dem Kapselköcher und Verschweißen einer im Deckel befindlichen und zur Sauglanze führenden Öffnung mit einer in der Haube gelagerten Schweißvorrichtung.

Vorzugsweise werden auch bei diesem Verfahren die Verfahrensschritte e) und f) nacheinander mehrfach zyklisch durchgeführt, wobei bei jedem Zyklus der Verfahrensschritt e) und anschließend der Verfahrensschritt f) durchgeführt werden.

Eine Vorrichtung zur fluiddichten Lagerung einer Mehrzahl von Behältern, in denen jeweils ein Brennstab oder Brennstababschnitt gekapselt ist, umfasst folgende Merkmale:
a) einen eine Mehrzahl von gitterförmigen Abstandhaltern aufweisenden Kapselköcher,
b) eine Haube zum fluiddichten Verschließen des im Gestell eingebrachten Kapselköchers,
c) eine durch die Haube und durch eine in einem in der Haube verschiebbar gelagerten Deckel hindurchgeführte Sauglanze zum Absaugen von im Kapselköcher (222) befindlichen Wasser,
d) die Haube weist einen Einlass und einen Auslass für ein Spülgas und ein Heizgas auf,
e) an den Auslass ist eine Messeinrichtung zum Messen des absoluten Feuchtegehaltes des aus dem Behälter austretenden Heizgases angeordnet,
f) in der Haube sind Mittel zum Aufsetzen und Verschweißen des Deckels auf den bzw. mit dem Kapselköcher angeordnet.

Zur weiteren Erläuterung der Erfindung wird auf die in den Figuren dargestellten Ausführungsbeispiele verwiesen. Es zeigen:
Fig. 1 eine Vorrichtung gemäß der Erfindung zur Kapselung eines Brennstabes oder Brennstabschnittes in einer schematischen Prinzipdarstellung,
Fig. 2 ein Diagramm, in dem der Feuchtegehalt eines aus dem Behälter oder eines Kapselköchers ausströmenden Heizgases gegen die Zeit aufgetragen ist,
Fig. 3 - 7 eine nicht erfindungsgemäße Vorrichtung zur fluiddichten Lagerung einer Mehrzahl von Behältern, in denen jeweils ein Brennstab oder Brennstababschnitt gekapselt ist, bei der Durchführung zeitlich aufeinanderfolgender Arbeitsschritte.

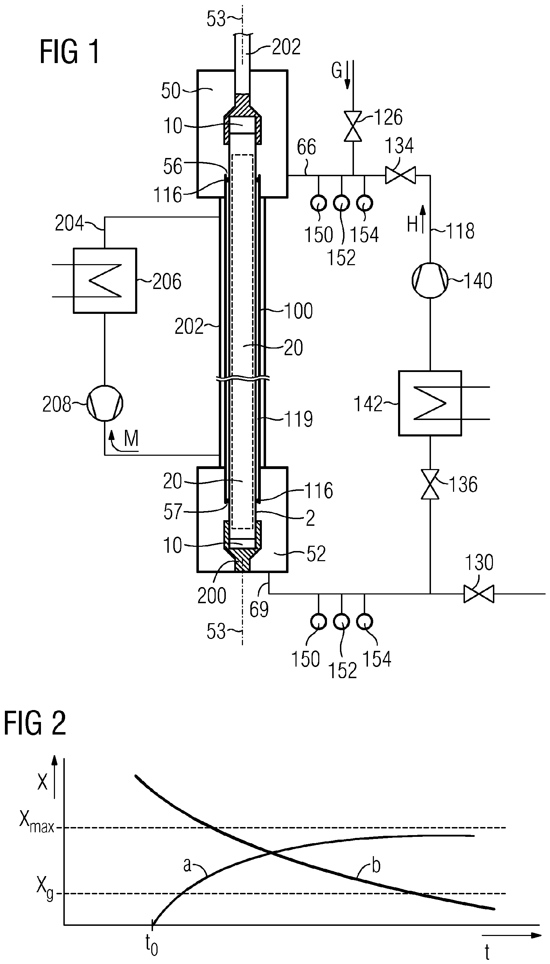

Gemäß Fig. 1 ist ein mit einem Brennstab 20 versehener Behälter 2 in eine Vorrichtung eingebracht worden, in der das im Behälter 2 befindliche Restwasser aus dem Behälter 2 entfernt wird und in der er nach der Verringerung des Restwassergehaltes auf einen bzw. unterhalb eines vorgegebenen maximal zulässigen Grenzwertes gasdicht verschlossen wird. In einem vorhergehenden Arbeitsschritt ist der in der Figur gestrichelt eingezeichnete Brennstab 20 in den Behälter 2 eingebracht worden, auf dessen Enden ein beispielsweise aus der EP 1 600 982 B1 bekanntes Verschlusselement 10 in einer Zwischenposition aufgeschraubt ist.

Die Vorrichtung umfasst eine erste und eine zweite Kammer 50, 52, die voneinander beabstandet auf einer gemeinsamen Systemachse 53 angeordnet sind. Die erste und zweite Kammer 50, 52 sind entlang dieser Systemachse 53 über ein an beiden Enden offenes Verbindungsrohr 100 miteinander starr verbunden. Die Enden des Verbindungsrohres 100 bilden in der ersten und zweiten Kammer 50, 52 eine erste bzw. zweite Öffnung 56, 57 durch die ein in das Verbindungsrohr 100 eingeführter Behälter 2 mit seinen Freienden über das Verbindungsrohr 100 hinaus in die Kammern 50, 52 hineinragt. Zwischen dem Verbindungsrohr 100 und dem Behälter 2 sind im Bereich dieser Freienden zustellbare Dichtelemente 116 angeordnet, die den zwischen Verbindungsrohr 100 und Behälter 2 vorhandenen zylindrischen Spaltraum 119 verschließen, so dass erste und zweite Kammer 50, 52 bei zwischen diesem angeordnetem Behälter 2 ausschließlich über diesen selbst fluidisch miteinander verbunden werden können.

Der mit dem Verschlusselement 10 versehene Behälter 2 ist in der zweiten Kammer 52 in einer an das Verschlusselement 10 angepassten Aufnahme 200 drehfixiert gelagert. In die erste Kammer 50 ist ein Handhabungswerkzeug 202 eingeführt, das das Verschlusselement 10 drehmomentschlüssig umgreift und mit dem die beiden Verschlusselemente 10 mit dem Behälter 2 in eine gasdichte Endposition verschraubt werden können.

An die erste Kammer 50 ist eine Einlassleitung 66 für ein Spülgas G angeschlossen, das durch den Behälter 2 in die zweite Kammer 52 strömt und diese über eine Auslassleitung 69 verlässt. Einlassleitung 66 und Auslassleitung 69 sind über Ventile 134 und 136 an eine außerhalb der Kammern 50,52 verlaufende Bypassleitung 118 angeschlossen, so dass durch Schließen von in der Einlassleitung 66 bzw. Auslassleitung 69 für das Spülgas G befindliche Ventile 126 bzw. 130 ein geschlossener Gaskreislauf entsteht, dessen Volumen das freie Volumen des Behälters 2 um Größenordnungen überschreitet und ein Vielfaches, mehr als ein 10-faches, im Ausführungsbeispiel etwa das 50-fache dieses Volumens beträgt. In diesem Gaskreislauf sind eine Pumpe 140 und eine Heizeinrichtung 142 zum Umwälzen bzw. Heizen eines im Gaskreislauf befindlichen Heizgases H angeordnet. Darüber hinaus sind im Gaskreislauf Messeinrichtungen 150, 152 und 154 angeordnet, mit denen die Temperatur, die relative Feuchte bzw. der Druck des in die erste Kammer 50 einströmenden und des aus der zweiten Kammer 52 ausströmenden Heizgases H gemessen werden können.

Das Verbindungsrohr 100 ist außerdem von einem zwischen den Kammern 50, 52 angeordneten Außenrohr 202 umgeben, das an einen Heizkreislauf 204 angeschlossen ist, in dem ebenfalls ein mit einer Heizeinrichtung 206 beheiztes fluides Medium M mit einer Pumpe 208 umgewälzt wird, so dass das Verbindungsrohr 100 thermisch von der Umgebung isoliert wird. Alternativ hierzu kann eine solche thermische Isolation auch durch Einbringen von wärmedämmenden Material oder Heizelementen zwischen Verbindungsrohr 100 und Außenrohr 202 erzielt werden.

Zunächst werden die zustellbaren Dichtelemente 116 geöffnet und durch Einblasen von Spülgas G werden die Bearbeitungskammern 50,52 und der Spaltraum 119 über die Auslassleitung 69 entwässert. Danach wird der Spaltraum 119 mit den Dichtelementen 116 verschlossen und das im Behälter 2 zwischen Brennstab 20 und Innenwand des Behälters 2 befindliche Wasser wird mit Hilfe des Spülgases G ausgetrieben. Danach werden die Ventile 126, 130 geschlossen und die in der Bypassleitung 118 befindlichen Ventile 134 und 136 geöffnet. Anschließend wird das in der Bypassleitung 118 befindliche Heizgas H kontinuierlich in diesem geschlossenen Gaskreislauf umgewälzt. Mit Hilfe der in der Nähe der ersten und zweiten Kammer 50, 52 in der Einlassleitung 66 und der Auslassleitung 69 jeweils angeordneten Messeinrichtungen 150, 152 und 154 werden die Temperatur, der Feuchtegehalt und der Druck des im Gaskreislauf strömenden Heizgases H erfasst. Mit den in der Auslassleitung 69 gemessenen Werten für Druck, Temperatur und relativen Feuchtegehalt kann der im Heizgas H enthaltene absolute Wasser- bzw. Feuchtegehalt in kg/m³ bestimmt werden und dessen zeitliche Entwicklung aufgenommen werden.

Im Diagramm gemäß Fig. 2 ist dieser absolute Feuchtegehalt X in Kurve a gegen die Zeit t aufgetragen. Der Figur ist zu entnehmen, dass der absolute Feuchtegehalt X ab dem Zeitpunkt t₀, ab dem das Heizgas im Gaskreislauf umgewälzt wird, stetig ansteigt, bis er in einem Plateau einen konstanten Endwert Xₘₐₓ erreicht. Das Erreichen dieses Endwertes Xₘₐₓ zeigt an, dass das innerhalb des geschlossenen Gaskreislaufes befindliche Wasser vollständig verdampft ist. Für den Fall, dass sich im Behälter 2 ein geöffneter Brennstab oder offene Brennstababschnitte befinden, ist außerdem sichergestellt, dass auch das im Kernbrennstoff gebundene Wasser vollständig verdampft ist.

Aus diesem Endwert Xₘₐₓ kann nun bei bekanntem freien Volumen des Behälters 2 und des Brennstabs 20 die absolute Masse des innerhalb des Behälters 2 befindlichen Wasserdampfes in Gramm ermittelt werden. Nach Erreichen des Endwertes Xₘₐₓ werden die Ventile 134 und 136 geschlossen. Damit ist die Menge des innerhalb des Behälters 2 noch befindlichen Wassers bekannt. Grundsätzlich könnte der Behälter 2 anschließend gasdicht verschlossen werden. Vorzugsweise werden jedoch erneut die Ventile 126 und 130 geöffnet und es wird der Behälter 2 erneut mit Spülgas G gespült. Auf diese Weise wird der im Behälter 2 und in den Brennstabplena befindliche Wasserdampf ausgetrieben, so dass die Menge des innerhalb des Behälters 2 befindlichen Wassers zusätzlich reduziert wird. Dementsprechend kann die vorher ermittelte Restmenge als ein oberer Wert angesehen werden, der größer ist als die tatsächliche Restmenge.

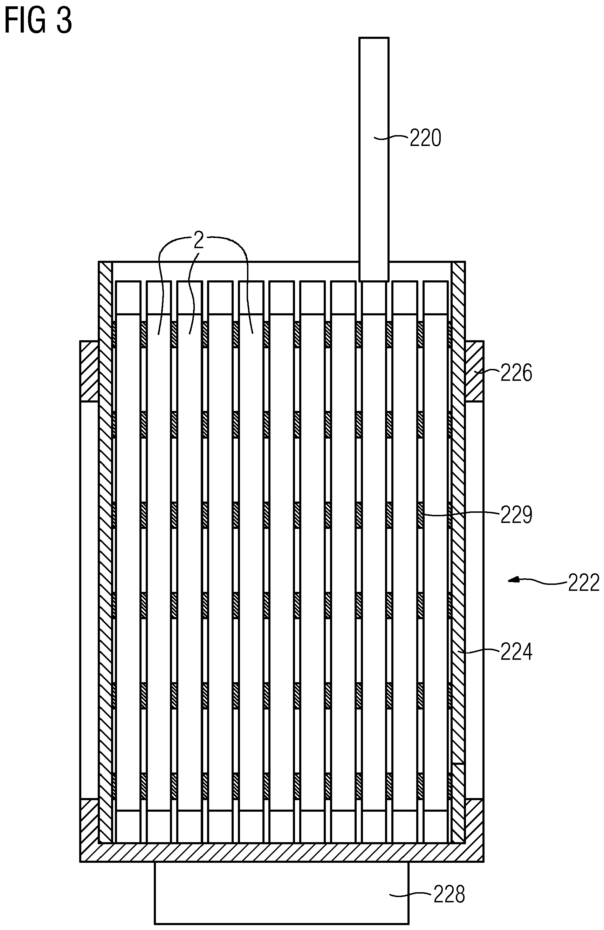

Der Behälter 2 kann dann mit den Verschlusselementen 10 verschweißt oder einer nachfolgend erläuterten weiteren Behandlung unterzogen werden. Bei dieser nachfolgenden Behandlung wird der Behälter 2 aus der Vorrichtung entnommen und mit Hilfe eines Handhabungswerkzeuges 220 in einen Kapselköcher 222 verbracht, der in Fig. 3 dargestellt ist und aus einem zylindrischen Aufnahmerohr 224 aufgebaut ist, das in einem Rahmen 226 angeordnet ist, der ein Fußteil 228 aufweist. Dieser Kapselköcher 222 ist zur Aufnahme einer Mehrzahl von Behältern 2 vorgesehen. Hierzu sind im Kapselköcher 222 eine Mehrzahl von axial beabstandeten gitterförmigen Abstandhaltern 229 angeordnet, in deren Zellen die Behälter 2 geführt sind.

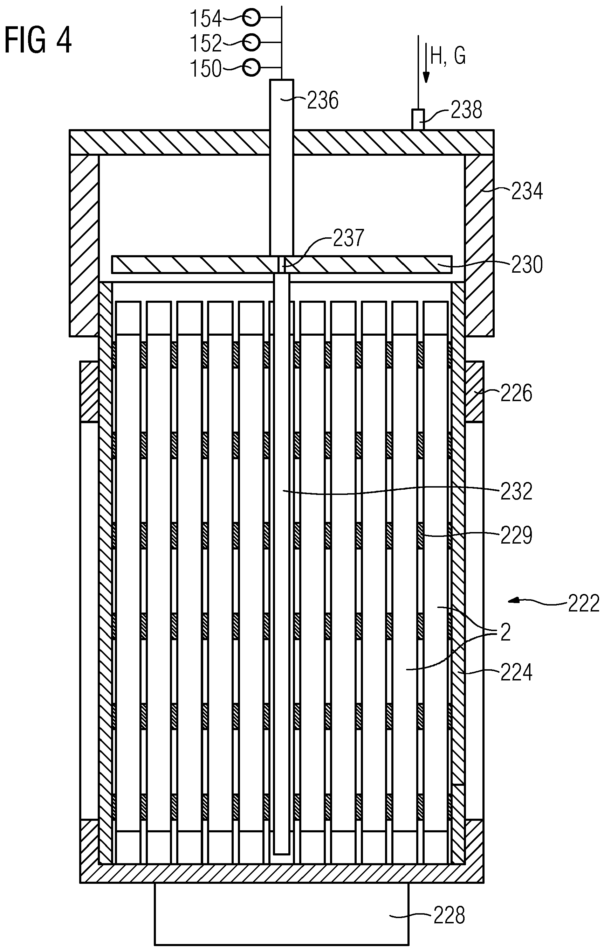

Gemäß Fig. 4 wird nach dem Befüllen des Kapselköchers 222 mit Behältern 2 auf das Aufnahmerohr 224 ein Deckel 230 aufgesetzt, der eine zentrale Sauglanze 232 aufweist, die bis zum Boden des Kapselköchers 222 führt und zum Absaugen von im Kapselköcher 222 befindlichen Wasser dient. Auf das Aufnahmerohr 224 wird fluiddicht eine Haube 234 aufgesetzt, durch die eine Saugleitung 236 hindurchgeführt ist, die über eine im Deckel 230 befindliche Öffnung 237 mit der Sauglanze 232 fluidisch verbunden ist. Über die Saugleitung 236 wird im Kapselköcher 222 befindliches Wasser unter gleichzeitiger Zufuhr von Spülgas G über eine Einführöffnung 238 abgesaugt. Anschließend wird über die Einführöffnung 238 Heizgas H zu- und über die Absaugleitung 236 abgeführt. Anders als beim Trocknen des Behälters 2 wird das Heizgas H nicht in einem geschlossenen Kreislauf geführt.

Mit Hilfe von Messeinrichtungen 150, 152 und 154 werden Temperatur, relativer Feuchtegehalt und Druck am Ausgang erfasst, aus denen der aktuelle absolute Feuchtegehalt X ermittelt wird, der mit zunehmender Dauer des Trocknungsvorganges stetig abnimmt. Der zeitliche Verlauf des absoluten Feuchtegehaltes X ist im Diagramm der Fig. 2 in Kurve b vereinfacht dargestellt.

Das Heizgas H wird solange durch den Kapselköcher 222 geleitet, bis der absolute Feuchtegehalt X einen vorgegebenen Grenzwert X_{g} erreicht oder unterschreitet. Der zeitliche Verlauf des absoluten Feuchtegehaltes X ist im Diagramm der Fig. 2 in Kurve b dargestellt. Dadurch ist sichergestellt, dass der absolute Gehalt des im Inneren des Kapselköchers 222 befindlichen Wassers vorgegebene Maximalwerte nicht überschreitet. Auf diese Weise ist eine sichere Aussage darüber möglich, ob vorgegebene Grenzwerte eingehalten werden.

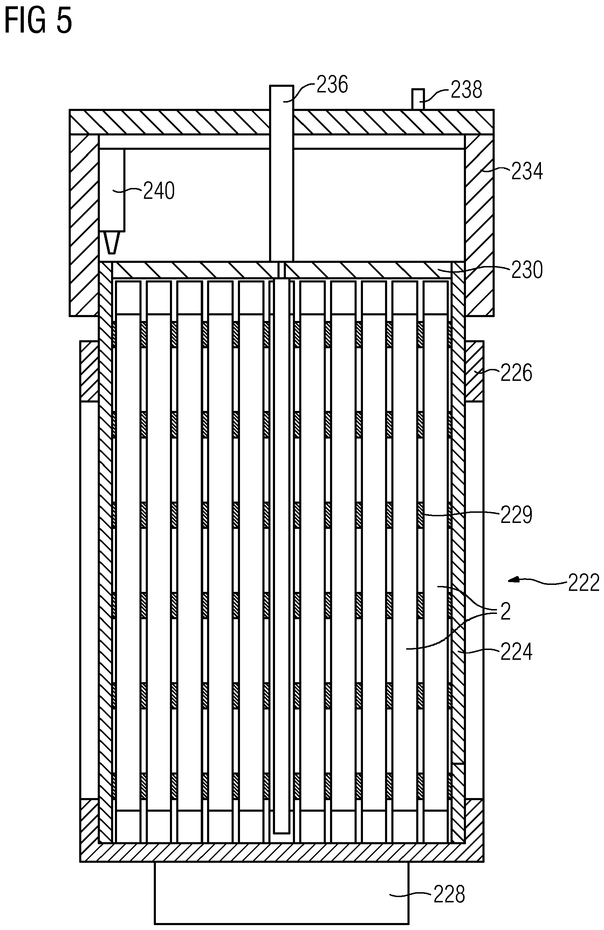

Nach Trocknen des Kapselköchers 222 wird gemäß Fig. 5 der Deckel mit dem Aufnahmerohr 224 mit einer im Inneren der Haube 234 drehbar um die Längsmittelachse des Aufnahmerohrs 224 gelagerten Schweißeinrichtung 240 verschweißt.

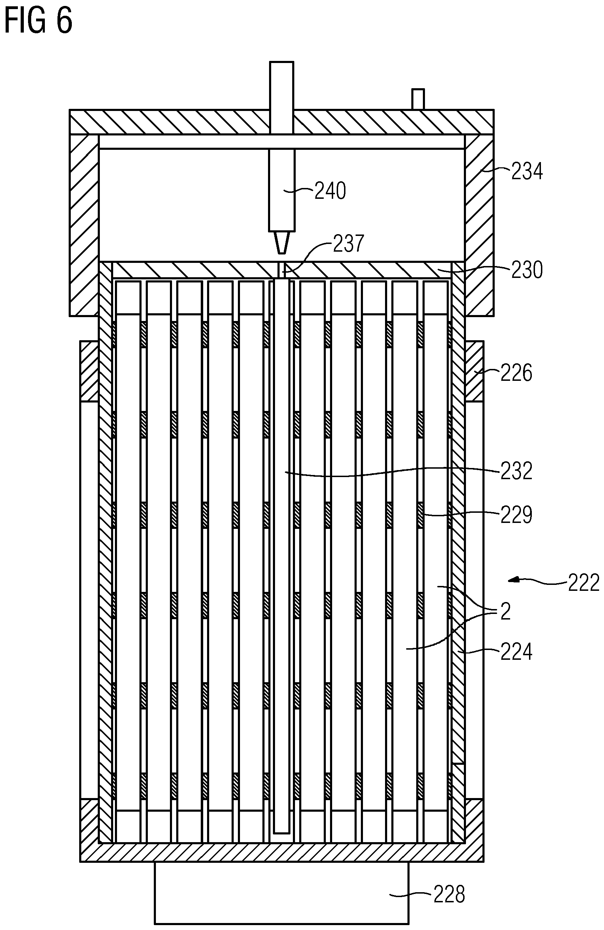

In einem nächsten Schritt wird mit der Schweißeinrichtung 240 gemäß Fig. 6 die im Deckel 230 befindliche Öffnung 237 zur Sauglanze 232 ebenfalls verschweißt. Zusätzlich können ggf. noch Ultraschallprüfeinrichtungen in der Haube 234 angeordnet sein, mit denen eine Überprüfung der Schweißnähte möglich ist.

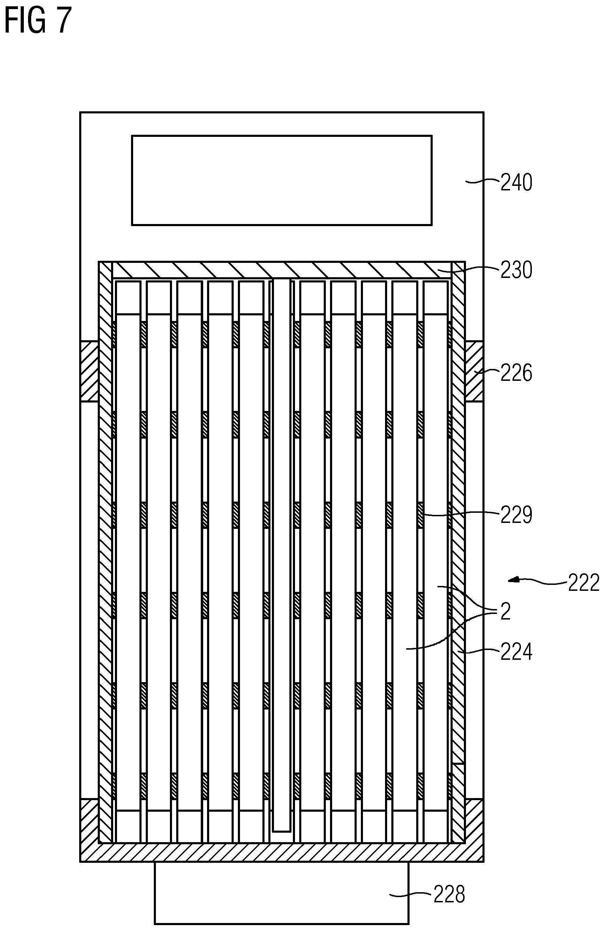

Anschließend wird gem. Fig. 7 die Haube 234 entnommen und auf den Rahmen 226 ein Transportkopf 240 aufgesetzt, mit dem der Transport des verschlossenen Kapselköchers 222 erleichtert ist.

Sowohl beim Spülen und Trocknen des Behälters 2 als auch beim Spülen und Trocknen des Kapselköchers 222 können diese beiden Verfahrensschritte mehrfach zyklisch wiederholt werden, so dass sich an ein erfolgtes Trocknen ein erneutes Spülen und danach ein erneutes Trocknen anschließen.

## Patentansprüche

1. Vorrichtung zur Kapselung eines in einen Behälter (2) eingebrachten Brennstabes (20) oder Brennstababschnittes in dem Behälter (2), mit folgenden Merkmalen:
a) die Vorrichtung weist eine erste und eine zweite Kammer (50, 52) auf,
b) erste und eine zweite Kammer (50, 52) sind voneinander beabstandet und auf einer gemeinsamen Systemachse (53) angeordnet,
c) erste und zweite Kammer (50, 52) sind mit einer ersten bzw. zweiten Öffnung (56, 57) zum Aufnehmen eines in die Kammer (50, 52) mündenden Freiendes des Behälters (2) derart versehen, dass erste und zweite Kammer (50, 52) bei zwischen diesen angeordnetem Behälter (2) ausschließlich über diesen selbst fluidisch miteinander verbunden werden können,
d) die erste Kammer (50) ist an eine Einlassleitung (66) und die zweite Kammer (52) an eine Auslassleitung (69) für ein Spülgas (G) angeschlossen,
e) Einlassleitung (66) und Auslassleitung (69) sind über eine außerhalb der Kammern (50, 52) verlaufende Bypassleitung (118) derart miteinander verbindbar, dass ein für Wasserdampf geschlossener Gaskreislauf entsteht, wobei im Gaskreislauf eine Pumpe (140) und eine Heizeinrichtung (142) zum Umwälzen bzw. Heizen eines im Gaskreislauf befindlichen Heizgases (H) angeordnet sind,
f) im Gaskreislauf sind Messeinrichtungen zum Erfassen des absoluten Feuchtegehaltes des aus der zweiten Kammer in die Bypassleitung (118) strömenden Heizgases (H) angeordnet,
g) jede Kammer (50, 52) weist Mittel zum Verschließen des Behälters (2) auf.

2. Vorrichtung nach Anspruch 1, bei der erste und zweite Kammer (50, 52) entlang der Systemachse (53) über ein Verbindungsrohr (100) miteinander starr verbunden sind, in das der Behälter (2) derart einführbar ist, dass er mit seinen Freienden über das Verbindungsrohr (100) hinausragt.

3. Vorrichtung nach Anspruch 2, bei der zwischen Behälter (2) und Verbindungsrohr (100) zumindest ein Dichtelement (116) angeordnet ist, das derart einstellbar ist, dass die Kammern (50, 52) ausschließlich über den Behälter (2) fluidisch miteinander verbunden sind.

4. Vorrichtung nach Anspruch 3, bei der an beiden Enden des Verbindungsrohres (100) ein einstellbares Dichtelement (116) angeordnet ist, so dass zwischen Behälter (2) und Verbindungsrohr (100) ein zylindrischer Spaltraum (119) gebildet ist, der gegenüber den Kammern (50, 52) fluiddicht abgeschlossen.

5. Verfahren zur Kapselung eines Brennstabes (20) oder Brennstababschnittes in einem Behälter (2) in einer Vorrichtung nach einem der Ansprüche 1 bis 4, mit folgenden Verfahrensschritten:
a) Einbringen des Brennstabes (20) oder Brennstababschnittes in den Behälter (2),
b) Anschließen eines der Enden des Behälters (2) an eine Spülgasleitung,
c) Entwässern und Spülen des Behälters (2) mit Spülgas (G),
d) Anschließen der Enden des Behälters (2) an eine Bypassleitung (118) derart, dass ein für Wasserdampf geschlossener Gaskreislauf entsteht und Zirkulieren eines Heizgases (H) in diesem Gaskreislauf bis der absolute Feuchtegehalt einen Endwert (Xₘₐₓ) erreicht, bei dem er nicht mehr ansteigt,
e) Trennen des Behälters (2) vom Gaskreislauf,
f) anschließendes fluiddichtes Verschließen des Behälters (2) an beiden Enden.

6. Verfahren nach Anspruch 5, bei dem der Behälter (2) vor dem Verschließen erneut mit Spülgas (G) gespült wird.

7. Verfahren nach Anspruch 5 oder 6, bei dem die Verfahrensschritte c) und d) nacheinander mehrfach zyklisch durchgeführt werden, wobei bei jedem Zyklus der Verfahrensschritt c) und anschließend der Verfahrensschritt d) durchgeführt werden.

## Claims

1. Device for encapsulating, in a container (2), a fuel rod (20) or a fuel rod section inserted into the container (2), having the following features:
a) the device has a first and a second chamber (50, 52),
b) first and second chambers (50, 52) are spaced apart from each other and are arranged on a common system axis (53),
c) first and second chambers (50, 52) are provided with a first or second opening (56, 57) for receiving a free end of the container (2) which opens into the chambers (50, 52), in such a way that, when the container (2) is arranged between said chambers (50, 52), the first and second chambers (50, 52) can be fluidically connected to each other exclusively via the container (2) itself,
d) the first chamber (50) is attached to an inlet line (66) and the second chamber (52) is attached to an outlet line (69) for a flushing gas (G),
e) the inlet line (66) and the outlet line (69) can be connected to each other via a bypass line (118) that runs outside the chambers (50, 52), in such a way that a gas circuit closed for water vapour emerges, wherein a pump (140) and a heating device (142) for circulating or heating a heating gas (H) located in the gas circuit are arranged in the gas circuit,
f) measuring devices for detecting the absolute humidity of the heating gas (H) flowing from the second chamber into the bypass line (118) are arranged in the gas circuit,
g) each chamber (50, 52) has means for sealing the container (2).

2. Device according to claim 1, wherein the first and second chambers (50, 52) are rigidly connected to each other along the system axis (53) via a connection pipe (100), into which the container (2) can be inserted in such a way that it extends beyond the connection pipe (100) with its free ends.

3. Device according to claim 2, wherein at least one sealing element (116) is arranged between the container (2) and the connection pipe (100), said sealing element (116) being able to be adjusted in such a way that the chambers (50, 52) are fluidically connected to each other exclusively via the container (2).

4. Device according to claim 3, wherein an adjustable sealing element (116) is arranged on the two ends of the connection pipe (100), such that a cylindrical space (119) is formed between the container (2) and the connection pipe (100), said space (119) being sealed in a fluid-tight manner with respect to the chambers (50, 52).

5. Method for encapsulating a fuel rod (20) or a fuel rod section in a container (2) in a device according to one of claims 1 to 4, having the following method steps:
a) inserting the fuel rod (20) or the fuel rod section into the container (2),
b) attaching one of the ends of the container (2) to a flushing gas line,
c) draining and flushing the container (2) with flushing gas (G),
d) attaching the ends of the container (2) to a bypass line (118) in such a way that a gas circuit closed for water vapour emerges, and circulating a heating gas (H) in this gas circuit until the absolute humidity reaches a final value (Xₘₐₓ), at which point it can no longer increase,
e) separating the container (2) from the gas circuit,
f) subsequent sealing of the container (2) in a fluid-tight manner at both ends.

6. Method according to claim 5, wherein the container (2) is flushed with flushing gas (G) again before sealing.

7. Method according to claim 5 or 6, wherein method steps c) and d) are carried out cyclically sever times one after the other, wherein in each cycle, method step c) and then method step d) are carried out.

## Revendications

1. Dispositif d'encapsulage, dans une cuve (2), d'un crayon combustible (20) ou d'un tronçon de crayon combustible, introduit(e) dans la cuve (2), ayant les caractéristiques suivantes :
a) le dispositif présente une première et une deuxième chambre (50, 52),
b) la première et la deuxième chambre (50, 52) sont distantes l'une de l'autre et disposées sur un axe système (53) commun,
c) la première et une deuxième chambre (50, 52) sont dotées d'un premier respectivement d'un deuxième orifice (56, 57) destiné à recevoir une extrémité libre, débouchant dans la chambre (50, 52), de la cuve (2) de telle sorte que la première et la deuxième chambre (50, 52) peuvent être reliées ensemble de manière fluidique exclusivement au moyen de cette cuve (2) lorsque celle-ci est disposée entre ces deux chambres,
d) la première chambre (50) est raccordée à une conduite d'admission (66) et la deuxième chambre (52) à une conduite d'évacuation (69) d'un gaz de purge (G),
e) la conduite d'admission (66) et la conduite d'évacuation (69) sont reliées ensemble par une conduite de dérivation (118) passant à l'extérieur des chambres (50, 52) de manière à créer un circuit de gaz fermé pour la vapeur d'eau, une pompe (140) et un dispositif de chauffage (142) destinés à la recirculation respectivement au chauffage d'un gaz de chauffage (H), se trouvant dans un circuit de gaz, sont disposés dans celui-ci,
f) dans le circuit de gaz se trouvent des dispositifs de mesure pour l'enregistrement de la teneur en humidité absolue du gaz de chauffage (HD) s'écoulant de la deuxième chambre vers la conduite de dérivation (118),
g) chaque chambre (50, 52) présente des moyens de fermeture de la cuve (2).

2. Dispositif selon la revendication 1, dans lequel la première et la deuxième chambre (50, 52) sont reliées ensemble de manière rigide le long de l'axe système (53) au moyen d'un tube de liaison (100) dans lequel la cuve (2) peut être introduite de telle manière que ses extrémités libres dépassent du tube de liaison (100).

3. Dispositif selon la revendication 2, dans lequel au moins un élément d'étanchéité (116) est disposé entre la cuve (2) et le tube de liaison (100), ledit élément d'étanchéité pouvant être ajusté de manière à ce que les chambres (50, 52) soient reliées de manière fluidique exclusivement au moyen de la cuve (2).

4. Dispositif selon la revendication 3, dans lequel un élément d'étanchéité (116) ajustable est disposé sur les deux extrémités du tube de liaison (100) de manière à former, entre la cuve (2) et le tube de liaison (100), un espace cylindrique (119) fermé de manière étanche aux fluides par rapport aux chambres (50, 52).

5. Procédé d'encapsulage d'un crayon de combustible (20) ou d'un tronçon de de crayon combustible dans une cuve (2) dans un dispositif selon l'une quelconque des revendications 1 à 4, comportant les étapes suivantes :
a) Introduction du crayon combustible (20) ou d'un tronçon de crayon combustible dans la cuve (2),
b) Raccordement de l'une des extrémités de la cuve (2) à une conduite de gaz de purge,
c) Drainage et purge de la cuve (2) avec un gaz de purge (G),
d) Branchement des extrémités de la cuve (2) à une conduite de dérivation (118) de manière à créer un circuit de gaz fermé pour la vapeur d'eau et à obtenir la circulation d'un gaz de chauffage (H) dans ce circuit de gaz jusqu'à ce que la teneur en humidité absolue atteigne une valeur finale (Xₘₐₓ) à laquelle elle n'augmente plus,
e) Séparation de la cuve (2) du circuit de gaz,
f) Puis, fermeture étanche aux fluides de la cuve (2) sur les deux extrémités.

6. Procédé selon la revendication 5, dans lequel la cuve (2) est purgée une nouvelle fois avec un gaz de purge (G) avant la fermeture.

7. Procédé selon la revendication 5 ou la revendication 6, dans lequel les étapes c) et d) sont exécutées plusieurs fois de manière cyclique l'une après l'autre, l'étape c) puis l'étape d) étant exécutées à chaque cycle.
